# EUROPEAN PATENT SPECIFICATION

(11) **EP 2 532 499 B1**
(45) Date of publication and mention of the grant of the patent: **27.11.2013**
(21) Application number: 11447013.1
(22) Date of filing: 10.06.2011
(51) Int. Cl.: B27N 9/00, C09K 21/10, C09J 161/00, C09K 21/04, C09J 161/32

(54) **Method of manufacturing of flame retardant panels**
Verfahren zur Herstellung flammhemmender Paneele
Procédé de fabrication de panneaux ignifuges

(43) Date of publication of application: 12.12.2012
(73) Proprietor: Advachem Sa, 7334 Hautrage (BE)
(72) Inventor: Francis, Georges, 7334 Hautrage (BE)
(74) Representative: Powis de Tenbossche, Roland

(56) References cited:
- CA-A1- 1 054 918
- US-A- 3 939 107
- US-A- 3 976 752
- US-A- 5 200 267

## Description

The present invention relates to a method according to claim 1 of production of flame retardant products comprising at least wood containing particles and/or fibres and at least an organic resin binder system, wherein the method comprises at least the following steps :
a mixing or contacting step in which at least wood containing particles and/or fibres and the organic resin binder system formaldehyde based resin system are mixed or contacted together, and
a hardening step in which the mixture of at least wood containing particles and/or fibres and organic binder resin system is hardened.

The present invention further relates to a product according to claim 14 produced by the method of claim 1.

For the manufacturing of products, panels, etc. having flame retardant properties, it is known to add to the organic resin binder (which can be hardened or cured) one or more additives having flame retardant properties.

For example UA80648 discloses the production of highly condensed ammonium polyphosphate suitable for decreasing the flammability of different classes of polymers. The said highly condensed ammonium polyphosphate is prepared by heating a mixture containing ammonium orthophosphate and urea at a temperature of 270°C - 300°C. Said highly condensed ammonium polyphosphate is adapted to form a kind of coating or layer in the polymer.

Another example of a production method for flame retardant products is described in US 3 939 107.

Panels formed from wood particles and/or fibres bound together by a thermosetting or curable resin binder have in general a low flame resistance, even if the resin binder has been premixed with one or more flame retardant additives. It has been observed that in case of fire, the wood particles and/or fibres forms weakening zones. Furthermore, the wood panels are using some organic material which are still in a releasable form, meaning an increase of fire damage due of said release of organic material.

For example, for wood panels, wood particles or fibres are often agglomerated with formaldehyde based binders which remain a good compromise cost, performance and ease of use for such applications. These binders are thermosetting resins obtained by polycondensation of formaldehyde, urea and, possibly, melamine. Typically, these adhesives compositions contain a substantial molar excess of formaldehyde. Some of this excess is released upon curing of the resin during the manufacture of the panel. However, it is well known that formaldehyde continues to be released from these panels even after the manufacturing process is completed.

Thus, formaldehyde in the indoor air has been a major concern for many years.

Such release of organic material (formaldehyde) further increases the risk of fire damage.

Several attempts have been made for many years for reducing formaldehyde emission:
- Modification of the glue by decreasing the molar ratio formaldehyde / urea
- Addition of amino-compounds to the gluing mixture, like urea (NH₂CONH₂), during the manufacture of the panel (for example JP2000/087541 discloses a wax mixing comprising urea as formaldehyde catcher)
- Mixing the formaldehyde based resin with other gluing material
- Increasing the press factor.
- Using free formaldehyde binders

However said attempts were not effective for increasing the flame retardant properties of the panels.

Ammonium polyphosphate is an inorganic salt of polyphosphoric acid and ammonia. The chain length (n) of this polymeric compound is both variable and branched, and can be greater than 1 000. Short and linear chain APPs (n < 100) are more water sensitive (hydrolysis) and less thermally stable than longer chain APPs (n >1000), which show a very low water solubility (< 0.1 g/ 100 ml).

Chemical Formula and structure: [NH₄ PO₃]ₙ

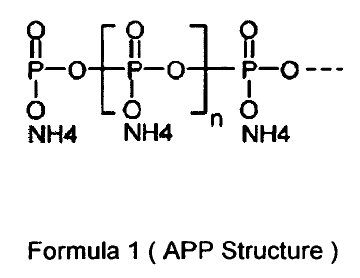

APP is a stable, non-volatile compound. In contact with water APP it slowly gets hydrolysed to monoammonium phosphate (orthophosphate). Higher temperatures and prolonged exposure to water will accelerate the hydrolysis. Long chain APP starts to decompose at temperatures above 300 °C to polyphosphoric acid and ammonia. Short chain APP will begin to decompose at temperatures above 150 °C.

CA1054918 discloses particle board comprising Ammonium polyphosphate as fire-retardant agent. Such ammonium polyphosphate is not a formaldehyde catcher.

It has now been discovered that by pretreating the wood containing particles or fibres so that said particles or fibres are associated to specific modified ammonium polyphosphate, the panels using said pretreated wood particles or fibres had increased fire resistance properties, especially increased fire retardant properties. Such properties are quite important, as giving more time to people for leaving a building in fire.

The method of the invention is characterised in that the wood containing particles and/or fibres, prior to be mixed or contacted with an organic binder system, are treated with a solution or a suspension containing at least the reaction product (MAPP) of melamine and/or urea with ammonium polyphosphate with a water solubility at 25°C greater than 0.5g / 100ml and/or having a weight average particle size of less than 50µm, wherein the weight ratio ammonium polyphosphate/ (urea and melamine) used for the preparation of the said reaction product is comprised between 1 : 1 and 25 : 1, advantageously between 2 : 1 and 15 : 1, preferably between 5 : 1 and 12 : 1, and/or during the reaction for forming the said reaction product (MAPP). Advantageously, the MAPP is at least the reaction product of ammonium polyphosphate with melamine (possibly with some urea). In case some melamine is used together with melamine for the preparation of the MAPP, the weight ratio melamine/urea is advantageously greater than 1 : 1, preferably greater than 2 : 1, such as comprised between 4 : 1 and 25 : 1.

The said reaction product MAPP has advantageously a water solubility at 25°C greater than 2g/100ml, preferably greater than 10g/100ml, most preferably greater than 20g/100ml, such as comprised from 25g to 70g/100ml, for example from 50g to 70g/100ml. The said reaction product can also be a mixture of MAPPs with different n or with different water solubility.

The APP used for the preparation of the MAPP is advantageously a compound of formula 1, with n being less than 20, preferably less than 10, such as comprised between 2 and 7. The APP can also be a mix of compounds of formula 1, in this case "n" is the weight average of the different n values for the different compounds of formula 1. The APP is most preferably substantially free of any compounds of formula 1 with n greater. than 10. Preferably, the APP mixes comprise less than 25% by weight of compound of formula 1 with n equal to 1.

Preferably, prior bonding the fibers or the particles of wood together by use of a thermosetting organic resin, wood particles and/or fibres are treated with the solution or suspension of MAPP, especially with an aqueous solution or suspension comprising modified ammonium polyphosphate, mentioned hereafter as MAPP, and then dried so as to reduce the water content to less than 5% by weight, advantageously to less than 3% by weight.

Further characteristics of the method of the invention re given in the attached claims.

The method of the invention is suitable for the wood panels in which wood particles or fibres are agglomerated with formaldehyde based binders which remain a good compromise cost, performance and ease of use for such applications. These binders are thermosetting resins obtained by polycondensation of formaldehyde, urea and/or melamine.

The present invention provides a method for producing panels comprising wood particles/fibres and a formaldehyde resin, having increased fire resistance (increased fire retardant properties), and having also a reduced emission or release of formaldehyde after the thermosetting step.

"Wood containing particles and fibres" or "wood particles and/or fibres" mean in the present specification particles and fibres produced or prepared from wood and/or wood residues, cellulose containing particles and fibres, particles from paper, cardboard, etc. The wood containing particles and fibres can be mixed with other particles and fibres, such as with glass fibres, glass beads, hollow glass beads, etc.

By "wood-based panels" is herein meant "particle board panel, MDF (medium density fibre board panel) and plywood", said panels can possibly contain particles and fibres which are not wood containing particles and fibres.

The invention relates thus to a method of production of flame retardant products comprising at least wood containing particles and/or fibres and at least an organic resin binder system, wherein the method comprises at least the following steps :
a mixing or contacting step in which at least wood containing particles and/or fibres and the organic resin binder system formaldehyde based resin system are mixed or contacted together, and
a hardening step in which the mixture of at least wood containing particles and/or fibres and organic binder resin system is hardened,
in which the wood containing particles and/or fibres, prior to be mixed or contacted with an organic binder system, are treated with a solution or a suspension containing at least the reaction product (MAPP) of melamine and/or urea with ammonium polyphosphate with a water solubility at 25°C greater than 0.5g / 100ml and/or having a weight average particle size of less than 50µm, wherein the weight ratio ammonium polyphosphate/ (urea and melamine) used for the preparation of the said reaction product is comprised between 1 : 1 and 25 : 1, advantageously between 2 : 1 and 15 : 1, preferably between 5 : 1 and 12 : 1, and/or during the reaction for forming the said reaction product (MAPP).

Advantageously, the MAPP is at least the reaction product of ammonium polyphosphate with melamine (possibly with some urea). In case some melamine is used together with melamine for the preparation of the MAPP, the weight ratio melamine/urea is advantageously greater than 1 : 1, preferably greater than 2 : 1, such as comprised between 4 : 1 and 25 : 1.

The method according to the invention comprises advantageously the step of treating the fibres or the particles of wood with a (advantageously aqueous) solution or suspension comprising ammonium polyphosphate, melamine and/or urea, followed by a reaction step between ammonium polyphosphate with melamine and/or urea or a modified ammonium polyphosphate, mentioned hereafter as MAPP, and by a drying step before contacting the wood containing particles or fibres.

The method of the invention has advantageously one or more of the following characteristics :
- said solution or suspension has a solid content in MAPP in the range from about 50 to about 70% by weight;
- the said solution or suspension contains at least a modified ammonium polyphosphate (MAPP) issued from the reaction of ammonium polyphosphate with substantially only melamine ; and/or
- the wood containing particles and/or fibres are treated with an aqueous solution comprising at least a modified ammonium polyphosphate (MAPP) issued from the reaction of ammonium polyphosphate with melamine and possibly some urea, said modified ammonium polyphosphate having a water solubility at 25°C greater than 10g / 100ml; and/or
- the wood containing particles and/or fibres, prior to be mixed or contacted with a formaldehyde based resin system, are treated at a temperature comprised between 25°C and 150°C, advantageously between 35°C and 100°C, advantageously at a pressure higher than 10⁵ Pa, with the said solution or suspension containing ammonium polyphosphate, melamine and possibly urea or/and products or compounds issued from the reaction of ammonium polyphosphate and melamine and/or urea; and/or
- the wood containing particles and/or fibres are adapted for the manufacture of particle boards, medium density fibreboards and plywood boards (PB, MDF, PW); and/or
- the said solution or suspension contains at least a modified ammonium polyphosphate (MAPP) issued from the reaction of ammonium polyphosphate with at least melamine, and wherein the modified ammonium polyphosphate (MAPP) is used in an amount of 50 - 250 kg (advantageously 80kg to 200kg, preferably from 100 to 150kg) per ton of wood containing particles or/and fibres ; and/or
- the wood containing particles or fibres are mixed to an aqueous solution or suspension containing at least melamine and ammonium polyphosphate during the reaction of melamine with ammonium polyphosphate; and/or
- the wood containing particles or fibres are treated in the said solution or suspension under an ammonia containing atmosphere; and/or
- the wood containing particles or fibres after being treated with the said solution or suspension are filtered and dried, before being mixed formaldehyde resin system; and/or
- the wood containing particles or fibres are first treated in a solution or suspension containing ammonium polyphosphate, then treated in a solution or suspension containing melamine and possibly ammonium polyphosphate, and/or
- the formaldehyde laden products are selected from the group consisting of particle boards, medium density fibre boards and plywood (PB, MDF, PW).

The invention relates also to a product comprising at least wood containing particles and/or fibres and at least a thermosetting organic resin (advantageously a formaldehyde based resin system) for bonding together at least the wood containing particles and /or fibres, said product being produced by a method according to the invention, so as to improve its fire retardant property.

### EXAMPLES:

### Example 1: preparation of aqueous solution/suspension of APP, melamine and Urea and/or MAPP

Various aqueous compositions have been prepared by mixing in water different ammonium polyphosphate with, melamine, possibly urea, possibly followed by partial or complete reaction between ammonium polyphosphate with melamine and/or urea. The solution or suspension were prepared so as to have a solid content comprised between 50 and 75%, such as a solid content of about 60%.

The following ammonium polyphosphates [NH₄ PO₃]ₙ have been used as starting material :
APP1 : [NH₄ PO₃]ₙ, with n having as average value about 10 and a P₂O₅ weight content of about 60%, the weight average particle size being comprised between 5µm and 20µm
APP2 : [NH₄ PO₃]ₙ with n having as average value about 20 and a P₂O₅ weight content of about 65%, the weight average particle size being comprised between 5µm and 20µm
APP3 : [NH₄ PO₃]ₙ with n having as average value about 30 and a P₂O₅ weight content of about 69%, the weight average particle size being comprised between 5µm and 20µm
APP4 : [NH₄ PO₃]ₙ with n having as average value about 5 and a P₂O₅ weight content of about 69%, the weight average particle size being comprised between 5µm and 20µm. The compound is substantially free of compounds [NH₄ PO₃]ₙ with n greater than or equal to 10.
APP5 : [NH₄ PO₃]ₙ with n having as average value about 3 and a P₂O₅ weight content of about 69%, the weight average particle size being comprised between 5µm and 20µm. The compound is substantially free of compounds [NH₄ PO₃]ₙ with n greater than or equal to 8.
APP6 : [NH₄ PO₃]ₙ with n having as average value about 4 and a P₂O₅ weight content of about 70%, the weight average particle size being comprised between 5µm and 20µm. The compound is substantially free of compounds [NH₄ PO₃]ₙ with n greater than or equal to 8.
APP7 : [NH₄ PO₃]ₙ with n having as average value about 2.5 and a P₂O₅ weight content of about 70%, the weight average particle size being comprised between 5µm and 20µm. The compound is substantially free of compounds [NH₄ PO₃]ₙ with n equal to 1 and free of compounds [NH₄ PO₃]ₙ with n greater than or equal to 5.
APP8 : [NH₄ PO₃]ₙ with n having as average value about 3.5 and a P₂O₅ weight content of about 70%, the weight average particle size being comprised between 5µm and 20µm. The compound is substantially free of compounds [NH₄ PO₃]ₙ with n greater than or equal to 5.
urea : (NH₂CONH₂), with a weight average particle size comprised between 100µm and 2000µm.
MAPP(X) : reaction product of APPX (with X being an integer between 1 and 8) with melamine, said reaction being carried out in an aqueous medium, at a sufficient temperature comprised between 20°C and 200°C (advantageously at a temperature comprised between 20°C and 100°C) and, if required or desired, under pressure, for a time required for having the partial or complete reaction of the APPX present.
MAPP(X)u : reaction product of APPX (with X being an integer between 1 and 8) with melamine and urea, said reaction being carried out in an aqueous medium, at a sufficient temperature comprised between 200°C and 400°C and under pressure, for a time required for having the partial or complete reaction of the APPX present.

The following table gives the composition of the several solutions or suspensions ("S") which were prepared. In said table, M designates the weight ratio between APPX and melamine before any reaction between APPX and Urea, T represents the weight ratio urea / melamine when urea is used, and P designates the percentage of reaction product (MAPPX) present in the solution or suspension, expressed as weight percentage of APPX having reacted with melamine.

When mixtures of AAPX's are used, the percentage of a compound APPX is the percentage by weight of said compound with respect to the total weight of the APPX's used for the preparation of the solution or suspension.

The solution or suspension can contain one or more additives, such as surfactant, phosphoric acid, boric acid, borax, etc.

| S | APPX | M | T | P | Comments |
|---|---|---|---|---|---|
| 1 | APP1 | 6 | 0 | 0 | |
| 2 | APP1 | 6 | 0 | 25 | |
| 3 | APP1 | 6 | 0 | about 50 | |
| 4 | APP1 | 10 | 0 | 0 | |
| 5 | APP1 | 10 | 0 | 25 | |
| 6 | APP1 | 10 | 0 | about 50 | |
| 7 | APP2 | 10 | 0 | 25 | |
| 8 | APP3 | 10 | 0 | 25 | |
| 9 | APP4 | 10 | 0 | 25 | |
| 10 | AAP5 | 10 | 0 | 25 | 1% borax present |
| 11 | AAP6 | 10 | 0 | 25 | 1% borax present |
| 12 | APP7 | 10 | 0 | 25 | |
| 13 | APP8 | 10 | 0 | 25 | |
| 14 | APP2 | 10 | 0 | about 50 | 1% borax present |
| 15 | APP3 | 10 | 0 | about 50 | |
| 16 | APP4 | 10 | 0 | about 50 | 1% borax present |
| 17 | APP5 | 10 | 0 | about 100 | |
| 18 | APP6 | 10 | 0 | about 100 | |
| 19 | APP7 | 10 | 0 | about 100 | |
| 20 | APP8 | 10 | 0 | about 100 | |

| S | APPX | M | T | P | Comments |
|---|---|---|---|---|---|
| 21 | APP1 | 6 | 0.1 | 25 | |
| 22 | APP1 | 6 | 0.1 | 50 | |
| 23 | APP1 | 6 | 0.1 | about 100 | |
| 24 | APP1 | 10 | 0.1 | 0 | |
| 25 | APP1 | 10 | 0.1 | 25 | |
| 26 | APP1 | 10 | 0.1 | about 50 | |
| 27 | APP2 | 10 | 0.1 | 30 | |
| 28 | APP3 | 10 | 0.1 | 40 | |
| 29 | APP4 | 10 | 0.1 | 40 | |
| 30 | AAP5 | 10 | 0.1 | 30 | 1% borax present |
| 31 | AAP6 | 10 | 0.1 | 30 | 1% borax present |
| 32 | APP7 | 10 | 0.1 | 40 | |
| 33 | APP8 | 10 | 0.1 | 50 | |
| 34 | APP2 | 10 | 0.1 | about 60 | 1% borax present |
| 35 | APP3 | 10 | 0.1 | about 60 | |
| 36 | APP4 | 10 | 0.1 | about 60 | 1% borax present |
| 37 | APP5 | 10 | 0.1 | about 60 | |
| 38 | APP6 | 10 | 0.1 | about 60 | |
| 39 | APP7 | 10 | 0.1 | about 60 | |
| 40 | APP8 | 10 | 0.1 | about 60 | |

| S | APPX | M | T | P | Comments |
|---|---|---|---|---|---|
| 41 | APP1 | 6 | 0.2 | 0 | |
| 42 | APP1 | 6 | 0.2 | 25 | |
| 43 | APP1 | 6 | 0.2 | 50 | |
| 44 | APP1 | 10 | 0.2 | 0 | |
| 45 | APP1 | 10 | 0.2 | 20 | |
| 46 | APP1 | 10 | 0.2 | 70 | |
| 47 | APP2 | 10 | 0.2 | 50 | |
| 48 | APP3 | 10 | 0.2 | 50 | |
| 49 | APP4 | 10 | 0.2 | 50 | |
| 50 | AAP5 | 10 | 0.2 | 50 | 1% borax present |
| 51 | AAP6 | 10 | 0.2 | 70 | 1% borax present |
| 52 | APP7 | 10 | 0.2 | 70 | |
| 53 | APP8 | 10 | 0.2 | 70 | |
| 54 | APP2 | 10 | 0.2 | about 60 | 1% borax present |
| 55 | APP3 | 10 | 0.2 | about 60 | |
| 56 | APP4 | 10 | 0.2 | about 60 | 1% borax present |
| 57 | APP5 | 10 | 0.2 | about 60 | |
| 58 | APP6 | 10 | 0.2 | about 60 | |
| 59 | APP7 | 10 | 0.2 | about 60 | |
| 60 | APP8 | 10 | 0.2 | about 60 | |

| S | APPX | M | P |
|---|---|---|---|
| 61 | 25% APP1 + 75% APP3 | 6 | 0 |
| 62 | 50% APP1 + 50% APP4 | 6 | 30 |
| 63 | 50% APP1 + 50% APP6 | 6 | about 50 |
| 64 | 25% APP1 + 75% APP3 | 10 | 0 |
| 65 | 50% APP1 + 50% APP4 | 10 | 25 |
| 66 | 50% APP1 + 50% APP6 | 10 | about 60 |
| 67 | 50% APP2 + 50% APP6 | 10 | 30 |
| 68 | 50% APP3 + 50% APP6 | 10 | 30 |
| 69 | 50% APP4 + 50% APP6 | 10 | 30 |
| 70 | 50% AAP5 + 50% APP6 | 10 | 30 |
| 71 | 50% AAP6 + 25% APP1 + 25% APP2 | 10 | 30 |
| 72 | 50% APP7 + 50% APP6 | 10 | 30 |
| 73 | 50% APP8 + 50% APP6 | 10 | 30 |
| 74 | 50% APP2 + 50% APP6 | 10 | about 60 |
| 75 | 50% APP3 + 50% APP6 | 10 | about 60 |
| 76 | 50% APP4 + 50% APP6 | 10 | about 100 |
| 77 | 50% APP5 + 50% APP6 | 10 | about 100 |
| 78 | 50% APP6 + 25% APP1 + 25% APP2 | 10 | about 70 |
| 79 | 50% APP7 + 50% APP6 | 10 | about 100 |
| 80 | 50% APP8 + 50% APP6 | 10 | about 100 |

### Example 2 : preparation of particle board panels.

For the production of the panels, the wood particles were treated with the solutions/suspensions of example 1. After being dipped and mixed, the particles were dried . The weight content MAPPX (product of the reaction of melamine with APPX) and/or MAPPXu (product of the reaction of melamine with APPX in presence of urea) in the wood particles was in a first set of tests 125kg per ton wood particles, in a second set of tests 175kg per ton wood particles and in a third set of tests 200 kg per ton wood particles.

In a further set of tests, the wood particles mixed into a solution or suspension containing APPX and melamine (possibly in presence of some urea) were submitted to a heat treatment for initiating a reaction for producing MAPPX, so as to have about all the APPX converted into MAPPX.

The particle board panels were prepared in a lab-scale hot press, the panel having the following characteristics:
- Length x width x thickness = 500 mm x 500 mm x 19 mm
- Density : from 700 to 800 kg/m3
- Press factor: 10 to 12 s/mm
- Press pressure : 45 kg/cm2
- Gluing rate : 12% (dry resin / dry wood)
- Hardener SO4(NH4)2 : 1.2% (dry hardener / dry resin)
- Used resin : MUF with 17% of melamine and molar ratio Formaldehyde/NH2 = 0.76
- fire resistant additive MAPPX or MAPPXu: 125 or 175 or 200 kg(dry) / ton wood.

The boards thus manufactured were tested on strength (Internal Bond test, according to EN319, expressed in MPa or N/mm2) and on formaldehyde content (perforator test according to EN120 and expressed in mg of formaldehyde per 100 g of board), swelling (water resistance according to EN319), flexion test according to EN310, and flame resistance (according to Norm NFP 92-501 « Essai par rayonnement d'un epiradiateur » ).

The various panel boards have been tested. The panel boards with the fire resistance additive were conform to the commercial requirement, namely a formaldehyde content in mg CH₂O per 100g of less than about 3 (such as less than 2 mg for panels using MAPPXu, i.e. a reduction of more than 50% with respect to the formaldehyde content of the boards free of MAPPX or MAPPXu); an high internal Bond Strength (more than 0.9MPa, a low swelling (less than 7%, such as less than 5%), a high flexion modulus (higher than 28 MPa) and a flame retardant characteristic (norm M1, with an increase of more than 30% of the start of the flame time following the radiation with respect to the start of the flaming time for the panel boards free of MAPPX or MAPPXu).

## Claims

1. A method of production of flame retardant products comprising at least wood containing particles and/or fibres and at least an organic resin binder system, wherein the method comprises at least the following steps :
a mixing or contacting step in which at least wood containing particles and/or fibres and the organic resin binder system formaldehyde based resin system are mixed or contacted together, and
a hardening step in which the mixture of at least wood containing particles and/or fibres and organic binder resin system is hardened,
said method being **characterised in that** the wood containing particles and/or fibres, prior to be mixed or contacted with an organic binder system, are treated with a solution or a suspension containing at least the reaction product MAPP of melamine and/or urea with ammonium polyphosphate, said ammonium 10kg phosphate having a water solubility at 25°C greater than 0.5g /100ml and/or having a weighted average particle size of less than 50µm, wherein the weight ratio ammonium polyphosphate/ urea and melamine used for the preparation of the said reaction product is comprised between 1 : 1 and 25 ; 1, advantageously between 2 : 1 and 15 : 1, preferably between 5 : 1 and 12 : 1, and/or during the reaction for forming the said reaction product MAPP.

2. The method of claim 1, in which the said reaction product has a water solubility at 25°C greater than 2g/100ml, advantageously greater than 10g/100ml, preferably greater than 20g/100ml.

3. The method of claim 1 or 2, in which the MAPP is at least the reaction product of ammonium polyphosphate with at least melamine, advantageously only with melamine.

4. The method of claim 3, in which the MAPP is the reaction product of ammonium polyphosphate with melamine and urea, the weight ratio melamine/urea being advantageously greater than 1 : 1, preferably greater than 2 : 1, such as comprised between 4: 1 and 25 : 1.

5. The method of any one of the preceding claims, in which, prior bonding the fibers or the particles of wood together by use of a thermosetting organic resin, wood particles and/or fibres are treated with the solution or suspension of MAPP, especially with an aqueous solution or suspension comprising modified ammonium polyphosphate MAPP, and then dried so as to reduce the water content to less than 5% by weight, advantageously to less than 3% by weight.

6. The method of any one of the preceding claims, in which the thermosetting organic resin is a formaldehyde based resin.

7. The method of any one of the preceding claims, said method comprising the step of treating the fibres or the particles of wood with a solution or suspension comprising ammonium polyphosphate, melamine and/or urea, followed by a reaction step between ammonium polyphosphate with melamine and/or urea, and by a drying step before contacting the wood particles or fibres with the thermosetting organic binder resin.

8. The method of any one of the preceding claims, in which said solution or suspension has a solid content in MAPP in the range from about 50 to about 70% by weight.

9. The method of any one of the preceding claims, in which the wood containing particles and/or fibres are treated with an aqueous solution comprising at least a modified ammonium polyphosphate MAPP issued from the reaction of ammonium polyphosphate with melamine and possibly some urea, said modified ammonium polyphosphate having a water solubility at 25°C greater than 10g / 100ml.

10. The method of any one of the preceding claims, in which the wood containing particles and/or fibres, prior to be mixed or contacted with a formaldehyde based resin system, are treated at a temperature comprised between 25°C and 150°C, advantageously between 35°C and 100°C, advantageously at a pressure higher than 10⁵ Pa, with the said solution or suspension containing ammonium polyphosphate, melamine and possibly urea or/and products or compounds issued from the reaction of ammonium polyphosphate and melamine and/or urea.

11. The method of any one of the preceding claims, in which the said solution or suspension contains at least a modified ammonium polyphosphate MAPP issued from the reaction of ammonium polyphosphate with at least melamine, and wherein the modified ammonium polyphosphate MAPP is used in an amount of 50 to 250 kg, advantageously 80kg to 200kg, preferably from 100 to 150kg per ton of wood containing particles or/and fibres.

12. The method of any one of the preceding claims, in which the wood containing particles or fibres are mixed to an aqueous solution or suspension containing at least melamine and ammonium polyphosphate during the reaction of melamine with ammonium polyphosphate.

13. The method of any one of the preceding claims, in which the wood containing particles or fibres are first treated in a solution or suspension containing ammonium polyphosphate, then treated in a solution or suspension containing melamine and possibly ammonium polyphosphate, and/or

14. A product comprising at least wood containing particles and/or fibres and at least a thermosetting organic resin, advantageously a formaldehyde based resin system for bonding together at least the wood containing particles and lor fibres, said product being produced by a method according to any one of the preceding claims, so as to ensure improved flame retardant properties.

15. The product of claim 14, in which the thermosetting organic resin is a formaldehyde based resin, and in which the quantity of MAPP present in and/or on the wood particles and/or fibres is sufficient for reducing the formaldehyde emission by at least 50% with respect to the same product except that it does not contain said MAPP.

## Patentansprüche

1. Verfahren zur Herstellung von Flammschutzmittelprodukten, umfassend mindestens Holz enthaltende Teilchen und/oder Fasern und mindestens ein organisches Harz-Bindemittelsystem, wobei das Verfahren mindestens die folgenden Schritte umfasst:
einen Schritt des Mischens oder In-Kontakt-Bringens, in welchem mindestens Holz enthaltende Teilchen und/oder Fasern und das organische Harz-Bindemittelsystem formaldehydbasiertes Harzsystem zusammen gemischt oder in Kontakt gebracht werden, und
einen Schritt des Härtens, in welchem die Mischung von mindestens Holz enthaltenden Teilchen und/oder Fasern und organischem Bindemittel-Harz-System gehärtet wird,
wobei das Verfahren **dadurch gekennzeichnet ist, dass** die Holz enthaltenden Teilchen und/oder Fasern, bevor sie mit einem organischen Bindemittelsystem gemischt oder in Kontakt gebracht werden, mit einer Lösung oder einer Suspension behandelt werden, weiche mindestens das Reaktionsprodukt MAPP von Melamin und/oder Harnstoff mit Ammoniumpolyphosphat enthält, wobei das Ammoniumpolyphosphat eine Wasserlöslichkeit bei 25°C größer als 0,5g / 100ml aufweist und/oder eine gewichtete durchschnittliche Teilchengröße von weniger als 50µm aufweist, wobei das Gewichtsverhältnis Ammoniumpolyphosphat/ Harnstoff und Melamin, welches für die Zubereitung des Reaktionsprodukts verwendet wird, zwischen 1 : 1 und 25 : 1, vorteilhaft zwischen 2 : 1 und 15 : 1, bevorzugt zwischen 5 ; 1 und 12 : 1 beträgt, und/oder während der Reaktion zum Bilden des Reaktionsprodukts MAPP.

2. Verfahren nach Anspruch 1, in welchem das Reaktionsprodukt eine Wasserlöslichkeit bei 25°C größer als 2g/100ml, vorteilhaft größer als 10g/100ml, bevorzugt größer als 20g/100ml aufweist.

3. Verfahren nach Anspruch 1 oder 2, in welchem das MAPP mindestens das Reaktionsprodukt von Ammoniumpolyphosphat mit mindestens Melamin, vorteilhaft nur mit Melamin, ist.

4. Verfahren nach Anspruch 3, in welchem das MAPP das Reaktionsprodukt von Ammoniumpolyphosphat mit Melamin und Harnstoff ist, wobei das Gewichtsverhältnis Melamin/Harnstoff vorteilhaft größer als 1 : 1, bevorzugt größer als 2 ; 1, wie beispielsweise zwischen 4 : 1 und 25 : 1, ist.

5. Verfahren nach einem der vorangehenden Ansprüche, in welchem Holzteilchen und/oder -fasern, bevor die Fasern oder Teilchen aus Holz unter Verwendung eines wärmeaushärtbaren organischen Harzes verbunden werden, mit der Lösung oder Suspension von MAPP, besonders mit einer wässrigen Lösung oder Suspension, umfassend modifiziertes Ammoniumpolyphosphat MAPP, behandelt werden und dann getrocknet werden, so dass der Wassergehalt auf weniger als 5 Gew.-%, vorteilhaft auf weniger als 3 Gew.-%, reduziert wird.

6. Verfahren nach einem der vorangehenden Ansprüche, in welchem das wärmeaushärtbare organische Harz ein formaldehydbasiertes Harz ist.

7. Verfahren nach einem der vorangehenden Ansprüche, das Verfahren umfassend den Schritt des Behandeins der Fasern oder Teilchen aus Holz mit einer Lösung oder Suspension, umfassend Ammoniumpolyphosphat, Melamin und/oder Harnstoff, gefolgt von einem Reaktionsschritt zwischen Ammoniumpolyphosphat mit Melamin und/oder Harnstoff und von einem Trocknungsschritt vor In-Kontakt-bringen der Holzteilchen oder -fasern mit dem wärmeaushärtbaren organischen Bindemittelharz.

8. Verfahren nach einem der vorangehenden Ansprüche, in weichem die Lösung oder Suspension einen Feststoffgehalt an MAPP im Bereich von ungefähr 50 bis ungefähr 70 Gew.-% aufweist.

9. Verfahren nach einem der vorangehenden Ansprüche, in weichem die Holz enthaltenden Teilchen und/oder Fasern mit einer wässrigen Lösung behandelt werden, welche mindestens ein modifiziertes Ammoniumpolyphosphat MAPP umfasst, weiches aus der Reaktion von Ammoniumpolyphosphat mit Melamin und möglicherweise etwas Harnstoff hervorgeht, wobei das modifizierte Ammoniumpolyphosphat eine Wasserlöslichkeit bei 25°C größer als 10g/100 ml aufweist.

10. Verfahren.nach einem der vorangehenden Ansprüche, in weichem die Holz enthaltenden Teilchen und/oder Fasern, bevor sie mit einem formaldehydbasierten Harzsystem gemischt oder in Kontakt gebracht werden, bei einer Temperatur zwischen 25°C und 150°C, vorteilhaft zwischen 35°C und 100°C, vorteilhaft bei einem Druck höher als 10⁵ Pa, mit der Lösung oder Suspension, welche Ammoniumpolyphosphat, Melamin und möglicherweise Harnstoff oder/und Produkte oder Verbindungen, welche aus der Reaktion von Ammoniumpolyphosphat und Melamin und/oder Harnstoff hervorgehen, enthält, behandelt werden.

11. Verfahren nach einem der vorangehenden Ansprüche, in welchem die Lösung oder Suspension mindestens ein modifiziertes Ammoniumpolyphosphat MAPP enthält, weiches aus der Reaktion von Ammoniumpolyphosphat mit mindestens Melamin hervorgeht, und wobei das modifizierte Ammoniumpolyphosphat MAPP in einer Menge von 5 bis 250 kg, vorteilhaft 80kg bis 200kg, bevorzugt von 100 bis 150kg pro Tonne Holz enthaltender Teilchen oder/und Fasern verwendet wird.

12. Verfahren nach einem der vorangehenden Ansprüche, in welchem die Holz enthaltenden Teilchen oder Fasern zu einer wässrigen Lösung oder Suspension, welche mindestens Melamin und Ammoniumpolyphsophat enthält, während der Reaktion von Melamin mit Ammoniumpolyphosphat zugemischt werden.

13. Verfahren nach einem der vorangehenden Ansprüche, in welchem die Holz enthaltenden Teilchen oder Fasern zuerst in einer Lösung oder Suspension, welche Ammoniumpolyphosphat enthält, behandelt werden, dann in einer Lösung oder Suspension, weiche Melamin und möglicherweise Ammoniumpolyphosphat enthält, behandelt werden,

14. Produkt, umfassend mindestens Holz enthaltende Teilchen und/oder Fasern und mindestens ein wärmeaushärtbares organisches Harz, vorteilhaft ein formaldehydbasiertes Harzsystem, zum Verbinden mindestens der Holz enthaltenden Teilchen und/oder Fasern, wobei das Produkt hergestellt wird durch ein Verfahren nach einem der vorangehenden Ansprüche, um verbesserte flammhemmende Eigenschaften zu gewährleisten.

15. Produkt nach Anspruch 14, in welchem das wärmeaushärtbare organische Harz ein formaldehydbasiertes Harz ist, und in welchem die Menge von MAPP, die in und/oder auf den Holzteilchen und/oder -fasern vorhanden ist, ausreichend ist zum Verringern der Formaldehydemission um mindestens 50%, bezogen auf das gleiche Produkt, außer, dass es nicht das MAPP enthält.

## Revendications

1. Procédé de production de produits ignifuges comprenant au moins des particules et/ou des fibres contenant du bois et au moins un système de liant à base de résine organique, dans lequel le procédé comprend au moins les étapes suivantes:
une étape de mélange ou de mise en contact, dans laquelle au moins des particules et/ou des fibres contenant du bois et le système de liant à base de résine organique et un système de résine à base de formaldéhyde sont mélangés ou mis en contact mutuel, et
une étape de durcissement dans laquelle le mélange d'au moins des particules et/ou des fibres contenant du bois et du système de liant à base de résine organique est durci,
ledit procédé étant **caractérisé en ce que** les particules et/ou les fibres contenant du bois, avant d'être mélangées ou mises en contact avec un système de liant organique, sont traitées avec une solution ou une suspension contenant au moins le produit de réaction MAPP de mélanine et/ou d'urée avec du polyphosphate d'ammonium, ledit polyphosphate d'ammonium présentant une solubilité dans l'eau à 25°C qui est supérieure à 0,5 g/100 ml et/ou présentant une taille de particule moyenne pondérée inférieure à 50 µm, dans lequel le rapport de poids entre le polyphosphate d'ammonium d'une part et l'urée et la mélamine d'autre part utilisés pour la préparation dudit produit de réaction est compris entre 1:1 et 25:1, avantageusement entre 2:1 et 15:1, de préférence entre 5:1 et 12:1, et/ou pendant la réaction pour former ledit produit de réaction MAPP.

2. Procédé selon la revendication 1, dans lequel ledit produit de réaction présente une solubilité dans l'eau à 25°C qui est supérieure à 2 g/100 ml, avantageusement supérieure à 10 g/100 ml, de préférence supérieure à 20 g/100 ml.

3. Procédé selon la revendication 1 ou 2, dans lequel le MAPP est au moins le produit de réaction de polyphosphate d'ammonium avec au moins de la mélamine, avantageusement avec uniquement de la mélamine.

4. Procédé selon la revendication 3, dans lequel le MAPP est le produit de réaction du polyphosphate d'ammonium avec la mélamine et l'urée, le rapport de poids entre la mélamine et l'urée étant avantageusement supérieur à 1:1, de préférence supérieur à 2:1, par exemple compris entre 4:1 et 25:1.

5. Procédé selon l'une quelconque des revendications précédentes, dans lequel, avant la liaison des fibres ou des particules de bois les unes aux autres en utilisant une résine organique thermodurcissante, les particules et/ou les fibres de bois sont traitées avec la solution ou la suspension de MAPP, en particulier avec une solution ou une suspension aqueuse comprenant du polyphosphate d'ammonium modifié MAPP, et sont ensuite séchées de manière à réduire la teneur en eau à moins de 5 % en poids, avantageusement à moins de 3 % en poids.

6. Procédé selon l'une quelconque des revendications précédentes, dans lequel la résine organique thermodurcissante est une résine à base de formaldéhyde.

7. Procédé selon l'une quelconque des revendications précédentes, ledit procédé comprenant l'étape de traitement des fibres ou des particules de bois avec une solution ou une suspension comprenant du polyphosphate d'ammonium, de la mélamine et/ou de l'urée, suivie par une étape de réaction entre le polyphosphate d'ammonium avec la mélamine et/ou l'urée, et par une étape de séchage avant la mise en contact des particules ou des fibres de bois avec la résine liante organique thermodurcissante.

8. Procédé selon l'une quelconque des revendications précédentes, dans lequel ladite solution ou suspension présente une teneur en solides dans le MAPP qui est comprise dans la gamme d'environ 50 % en poids à environ 70 % en poids.

9. Procédé selon l'une quelconque des revendications précédentes, dans lequel les particules et/ou les fibres contenant du bois sont traitées avec une solution aqueuse comprenant au moins un polyphosphate d'ammonium modifié MAPP issu de la réaction du polyphosphate d'ammonium avec la mélamine et éventuellement de l'urée, ledit polyphosphate d'ammonium modifié présentant une solubilité dans l'eau à 25°C qui est supérieure à 10 g/100 ml.

10. Procédé selon l'une quelconque des revendications précédentes, dans lequel les particules et/ou les fibres contenant du bois, avant d'être mélangées ou mises en contact avec un système de résine à base de formaldéhyde, sont traitées à une température qui est comprise entre 25°C et 150°C, avantageusement entre 35°C et 100°C, avantageusement à une pression qui est supérieure à 10⁵ Pa, avec ladite solution ou suspension contenant du polyphosphate d'ammonium, de la mélamine et éventuellement de l'urée et/ou des produits ou des composés issus de la réaction du polyphosphate d'ammonium et de la mélamine et/ou de l'urée.

11. Procédé selon l'une quelconque des revendications précédentes, dans lequel ladite solution ou suspension continent au moins du polyphosphate d'ammonium modifié MAPP issu de la réaction du polyphosphate d'ammonium avec au moins de la mélamine, et dans lequel le polyphosphate d'ammonium modifié MAPP est utilisé en une quantité comprise entre 50 kg et 250 kg, avantageusement entre 80 kg et 200 kg, de préférence entre 100 kg et 150 kg par tonne de particules et/ou de fibres contenant du bois.

12. Procédé selon l'une quelconque des revendications précédentes, dans lequel les particules et/ou les fibres contenant du bois sont mélangées à une solution ou une suspension aqueuse contenant au moins de la mélamine et du polyphosphate d'ammonium pendant la réaction de la mélamine avec du polyphosphate d'ammonium.

13. Procédé selon l'une quelconque des revendications précédentes, dans lequel les particules et/ou les fibres contenant du bois sont d'abord traitées dans une solution ou une suspension contenant du polyphosphate d'ammonium, et sont ensuite traitées dans une solution ou une suspension contenant de la mélamine et éventuellement du polyphosphate d'ammonium.

14. Produit comprenant au moins des particules et/ou des fibres contenant du bois et au moins une résine organique thermodurcissante, avantageusement un système de résine à base de formaldéhyde pour lier les unes aux autres au moins les particules et/ou les fibres contenant du bois, ledit produit étant produit par un procédé selon l'une quelconque des revendications précédentes, de manière à obtenir des propriétés ignifuges améliorées.

15. Produit selon la revendication 14, dans lequel la résine organique thermodurcissante est une résine à base de formaldéhyde, et dans lequel la quantité de MAPP présente dans et/ou sur les particule et/ou les fibres de bois est suffisante pour réduire l'émission de formaldéhyde d'au moins 50 % par rapport au même produit qui ne contient pas ledit MAPP.
